# EUROPEAN PATENT APPLICATION

(11) **EP 4 756 610 A1**
(43) Date of publication of application: **10.06.2026**
(21) Application number: 25221115.6
(22) Date of filing: 05.12.2025
(51) Int. Cl.: G06F 9/451, G06F 9/54, G06F 16/957

(54) **EXPERIENCE CONFIGURATION FOR DYNAMIC USER INTERFACE TILES**

(30) Priority: 05.12.2024 US 202463728487 P; 05.12.2024 US 202463728476 P; 05.12.2024 US 202463728494 P; 02.12.2025 US 202519406051
(71) Applicant: Capital One Services, LLC, McLean, Virginia 22102 (US)
(72) Inventor: DELIA, Christopher, McLean, VA 22102 (US); BERTON, Dominique, McLean, VA 22102 (US); BILENKIN, Dimitri, McLean, VA 22102 (US); BANSKOTA, Rishab, McLean, VA 22102 (US); BARTHOLOW, Eric, McLean, VA 22102 (US); HUSSEY, Donald Patrick, McLean, VA 22102 (US); NATEKAR, Devendra, McLean, VA 22102 (US)
(74) Representative: Boult Wade Tennant LLP

(57) **Abstract**

In some implementations, a system may receive, from a client device, a client request for a dynamic user experience associated with a user interface. The system may obtain an experience configuration associated with the dynamic user experience, wherein the experience configuration indicates a data provider for the dynamic user experience. The system may transmit, to the data provider, a data request, wherein the data request is generated based on the experience configuration. The system may receive, from the data provider, the dynamic data based on transmitting the data request. The system may transmit, to the client device, one or more tile specifications indicating user interface information for a user interface tile associated with the dynamic user experience to cause the client device to display the user interface tile via the user interface.

## Description

### CROSS-REFERENCE TO RELATED APPLICATIONS

This Patent Application claims priority to U.S. Provisional Patent Application No. 63/728,487, filed on December 5, 2024, and entitled "CAPABILITY NEGOTIATION FOR DYNAMIC USER INTERFACE TILES," to U.S. Provisional Patent Application No. 63/728,476, filed on December 5, 2024, and entitled "EXPERIENCE CONFIGURATION FOR DYNAMIC USER INTERFACE TILES," and to U.S. Provisional Patent Application No. 63/728,494, filed on December 5, 2024, and entitled "RESOLVING AND HYDRATING DYNAMIC TILE SPECIFICATIONS." The disclosures of the prior Applications are considered part of and are incorporated by reference into this Patent Application.

### BACKGROUND

A graphical user interface is a form of user interface that allows users to interact with electronic devices. A web browser or application executing on a client device may provide a graphical user interface that presents one or more pages. A user may navigate to a page by entering a web address into an address bar of the web browser and/or by clicking a link displayed via another page. Navigation to a page may consume resources of a client device on which the web browser is installed or the application is executing, may consume resources of a server that serves the page to the client device, and/or may consume network resources used for communications between the client device and the server.

### SUMMARY

In some implementations, a system for configuring a data retrieval mechanism for dynamic user interface tiles includes one or more memories; and one or more processors, communicatively coupled to the one or more memories, configured to: receive, from a client device, a client request for a dynamic user experience associated with a user interface, wherein the client request indicates client data associated with the client device; obtain an experience configuration associated with the dynamic user experience, wherein the experience configuration indicates that a data provider for the dynamic user experience is a microservice, and wherein the experience configuration indicates one or more data request parameters for formatting a data request to the microservice; transmit, to the microservice, the data request, wherein the data request is for dynamic data associated with the dynamic user experience, wherein the data request is generated based on the one or more data request parameters, and wherein the data request indicates the client data; receive, from the microservice, the dynamic data based on the data request; generate, based on the dynamic data and the dynamic user experience, one or more tile specifications indicating user interface information for a user interface tile associated with the dynamic user experience; and transmit, to the client device, the one or more tile specifications to cause the client device to display the dynamic user experience via the user interface.

In some implementations, a method of configuring a data retrieval mechanism for dynamic user interface tiles includes receiving, by a tile provider system and from a client device, a client request for a dynamic user experience associated with a user interface; obtaining, by the tile provider system, an experience configuration associated with the dynamic user experience, wherein the experience configuration indicates a data provider for the dynamic user experience, and wherein the data provider is either a microservice or a data orchestrator; transmitting, by the tile provider system and to the data provider, a data request, wherein the data request is for dynamic data associated with the dynamic user experience, wherein the data request is generated based on the experience configuration; receiving, by the tile provider system and from the data provider, the dynamic data based on transmitting the data request; generating, by the tile provider system and based on the dynamic data and the dynamic user experience, one or more tile specifications indicating user interface information for a user interface tile associated with the dynamic user experience; and transmitting, by the tile provider system and to the client device, the one or more tile specifications to cause the client device to display the user interface tile via the user interface.

In some implementations, a system includes a routing component configured to route requests for dynamic user experiences to tile providers; a tile resolver component configured to identify tile specifications for dynamic user experiences; a tile hydrator component configured to populate the tile specifications; and a tile provider configured to: obtain, from the routing component, an indication of a dynamic user experience requested by a client device; obtain an experience configuration associated with the dynamic user experience, wherein the experience configuration indicates a data provider for the dynamic user experience, and wherein the data provider is either a microservice or a data orchestrator; transmit, to the data provider, a data request, wherein the data request is for dynamic data associated with the dynamic user experience, wherein the data request is generated based on the experience configuration; receive, from the data provider, the dynamic data based on the data request; generate, based on the dynamic data and the dynamic user experience, one or more tile specifications indicating user interface information for a user interface tile associated with the dynamic user experience; and transmit, to the routing component, the one or more tile specifications to cause the user interface tile to be displayed.

According to a first aspect of the invention, there is provided a system for configuring a data retrieval mechanism for dynamic user interface tiles, the system comprising: one or more memories; and one or more processors, communicatively coupled to the one or more memories, configured to: receive, from a client device, a client request for a dynamic user experience associated with a user interface, wherein the client request indicates client data associated with the client device; obtain an experience configuration associated with the dynamic user experience, wherein the experience configuration indicates that a data provider for the dynamic user experience is a microservice, and wherein the experience configuration indicates one or more data request parameters for formatting a data request to the microservice; transmit, to the microservice, the data request, wherein the data request is for dynamic data associated with the dynamic user experience, wherein the data request is generated based on the one or more data request parameters, and wherein the data request indicates the client data; receive, from the microservice, the dynamic data based on the data request; generate, based on the dynamic data and the dynamic user experience, one or more tile specifications indicating user interface information for a user interface tile associated with the dynamic user experience; and transmit, to the client device, the one or more tile specifications to cause the client device to display the dynamic user experience via the user interface.

In some embodiments of the first aspect, the one or more processors, to generate the one or more tile specifications, are configured to: transmit, to a tile resolver component, an indication of the dynamic user experience and an indication of the client device; receive, from the tile resolver component, an indication of the one or more tile specifications; transmit, to a tile hydrator component, an indication of the one or more tile specifications and the dynamic data; and receive, from the tile hydrator component, the one or more tile specifications.

In some embodiments of the first aspect, the one or more data request parameters indicate an application layer protocol request method to be used for the data request.

In some embodiments of the first aspect, the one or more data request parameters include at least one of: a header version, one or more schema parameters, or a payload configuration.

In some embodiments of the first aspect, the one or more processors, to obtain the experience configuration, are configured to: identify, based on the client request, an identifier of the dynamic user experience; and obtain, based on the identifier, the experience configuration.

In some embodiments of the first aspect, the one or more processors are further configured to: generate the data request in a format indicated by the one or more data request parameters, wherein a body of the data request indicates the client data.

In some embodiments of the first aspect, the microservice is a single endpoint configured to provide the dynamic data for the dynamic user experience.

According to a second aspect of the invention, there is provided a method of configuring a data retrieval mechanism for dynamic user interface tiles, comprising: receiving, by a tile provider system and from a client device, a client request for a dynamic user experience associated with a user interface; obtaining, by the tile provider system, an experience configuration associated with the dynamic user experience, wherein the experience configuration indicates a data provider for the dynamic user experience, and wherein the data provider is either a microservice or a data orchestrator; transmitting, by the tile provider system and to the data provider, a data request, wherein the data request is for dynamic data associated with the dynamic user experience, wherein the data request is generated based on the experience configuration; receiving, by the tile provider system and from the data provider, the dynamic data based on transmitting the data request; generating, by the tile provider system and based on the dynamic data and the dynamic user experience, one or more tile specifications indicating user interface information for a user interface tile associated with the dynamic user experience; and transmitting, by the tile provider system and to the client device, the one or more tile specifications to cause the client device to display the user interface tile via the user interface.

In some embodiments of the second aspect, the experience configuration indicates one or more data request parameters for formatting the data request. In some such embodiments, the data provider is the microservice, and the one or more data request parameters include at least one of: a request method, a header configuration, or a payload configuration.

In some embodiments of the second aspect, the data orchestrator is configured to obtain data from multiple data sources, and the microservice is configured to obtain data from a single data source.

In some embodiments of the second aspect, the data provider is the data orchestrator, and the data request includes a declarative data fetching query.

In some embodiments of the second aspect, the experience configuration includes a data provider field that indicates the data provider.

In some embodiments of the second aspect, generating the data request comprises: transmitting, to a tile resolver component, an indication of the dynamic user experience and an indication of the client device; receiving, from the tile resolver component, an indication of the one or more tile specifications; transmitting, to a tile hydrator component, an indication of the one or more tile specifications and the dynamic data; and receiving, from the tile hydrator component, the one or more tile specifications, wherein the one or more tile specifications are populated using the dynamic data.

In some embodiments of the second aspect, the experience configuration indicates a format and configuration for the data request.

According to a third aspect of the invention, there is provided a system, comprising: a routing component configured to route requests for dynamic user experiences to tile providers; a tile resolver component configured to identify tile specifications for dynamic user experiences; a tile hydrator component configured to populate the tile specifications; and a tile provider configured to: obtain, from the routing component, an indication of a dynamic user experience requested by a client device; obtain an experience configuration associated with the dynamic user experience, wherein the experience configuration indicates a data provider for the dynamic user experience, and wherein the data provider is either a microservice or a data orchestrator; transmit, to the data provider, a data request, wherein the data request is for dynamic data associated with the dynamic user experience, wherein the data request is generated based on the experience configuration; receive, from the data provider, the dynamic data based on the data request; generate, based on the dynamic data and the dynamic user experience, one or more tile specifications indicating user interface information for a user interface tile associated with the dynamic user experience; and transmit, to the routing component, the one or more tile specifications to cause the user interface tile to be displayed.

In some embodiments of the third aspect, the tile provider, to generate the one or more tile specifications, is configured to: transmit, to the tile resolver component, an indication of the dynamic user experience and an indication of the client device; receive, from the tile resolver component, an indication of the one or more tile specifications; transmit, to the tile hydrator component, an indication of the one or more tile specifications and the dynamic data; and receive, from the tile hydrator component, the one or more tile specifications, wherein the one or more tile specifications are populated using the dynamic data.

In some embodiments of the third aspect, the tile provider, to obtain the indication of the dynamic user experience requested by the client device, is configured to: obtain client data associated with the client device, and wherein the data request indicates the client data.

In some embodiments of the third aspect, the experience configuration indicates that the data provider is the microservice, and the tile provider is configured to: generate the data request using a format indicated by the experience configuration.

In some embodiments of the third aspect, the experience configuration indicates that the data provider is the data orchestrator, and the tile provider is configured to: generate a declarative data fetching query that is configured to cause the data orchestrator to provide the dynamic data.

### BRIEF DESCRIPTION OF THE DRAWINGS

Figs. 1A-1C are diagrams of an example associated with an experience configuration for dynamic user interface tiles, in accordance with some embodiments of the present disclosure.
Fig. 2 is a diagram of an example associated with an experience configuration for dynamic user interface tiles, in accordance with some embodiments of the present disclosure.
Fig. 3 is a diagram of an example associated with a tile specification for dynamic user interface tiles, in accordance with some embodiments of the present disclosure.
Fig. 4 is a diagram of an example associated with a tile provider system for dynamic user interface tiles, in accordance with some embodiments of the present disclosure.
Fig. 5 is a diagram of an example environment in which systems and/or methods described herein may be implemented, in accordance with some embodiments of the present disclosure.
Fig. 6 is a diagram of example components of a device associated with an experience configuration for dynamic user interface tiles, in accordance with some embodiments of the present disclosure.
Fig. 7 is a flowchart of an example process associated with an experience configuration for dynamic user interface tiles, in accordance with some embodiments of the present disclosure.

### DETAILED DESCRIPTION

The following detailed description of example implementations refers to the accompanying drawings. The same reference numbers in different drawings may identify the same or similar elements.

A user interface of a client device may include a page for presentation via the client device. The user interface may include one or more graphical elements (e.g., for a graphical user interface (GUI)) that are configured to enable a user to interact with the client device (e.g., rather than using text-based commands or other commands). The graphical element(s) may include icons, visual indicators, buttons, menus, windows, text, interactive components, links, and/or visual elements, among other examples. The graphical elements may enable different user experiences to be provided for display to the user via the GUI. As used herein, "user experience" refers to a manner and/or design in which information is presented to a user via one or more graphical elements of a GUI. A user experience may include a design (e.g., a size, a shape, and/or content being displayed) and/or layout of one or more graphical elements. A user experience may be evaluated based on one or more factors, such as usability, accessibility, visual design, responsiveness, and/or ease of navigation, among other examples. For example, a user experience may be designed to make the GUI intuitive, efficient, and/or enjoyable for a user to accomplish a goal. Therefore, improved user experiences for a GUI may reduce the amount of navigation performed by the user via the client device to accomplish the goal, thereby conserving processing resources, network resources, and/or power resources, among other examples, that would have otherwise been associated with additional navigation via the client device. Further, improved user experiences for a GUI may make data easier to access by enhancing the GUI, thereby enhancing user-friendliness of the client device and the GUI, and improving the ability of the user to use the client device, among other examples.

In some cases, a user experience may be changed or redesigned over time (e.g., to improve the performance and/or effectiveness of the user experience). However, the user experience may be provided via multiple channels that use respective interfaces (e.g., GUIs or other interfaces) to provide the user experience for display (e.g., where each channel is configured for a specific platform while maintaining the design and interactions of the user experience). For example, the multiple channels may include one or more applications (e.g., a web application or a mobile application), a web page, and/or a program (e.g., executing on the client device), among other examples. Additionally, a given channel may be associated with multiple variations or types. For example, a mobile application may be deployed via multiple operating systems that have different design conventions, use different formats, have application programming interface (API) details, and/or support different hardware, among other examples.

Therefore, it may be difficult to maintain consistency when updating or changing a user experience across multiple channels because of the channel-specific (or operating system-specific) differences. For example, it may be difficult to maintain a uniform design and functionality across various platforms (e.g., web, mobile, and/or desktop) that may have different user interface guidelines, technical limitations, and/or performance characteristics. Additionally, when deploying updates for mobile applications, the process may be more complex due to the different requirements of different operating systems. Further, an application may be associated with different versions. Different users may be using different versions of the application, introducing additional complexity associated with deploying the updated user experience across different versions of the same application (e.g., where the different versions may support different features). Additionally, ensuring synchronization of features, performance, and/or updates across all channels without introducing inconsistencies or bugs can be a time-consuming and resource-intensive process. As a result, updating a user experience may consume significant processing resources and/or time associated with designing, configuring, deploying, and/or testing the user experience separately for each channel (and/or for each operating system for a given channel).

In some examples, an update to a user experience may be deployed by deploying updated code for the GUI, such as by updating hypertext markup language (HTML) code. This may include updating the HTML structure for a GUI, such as a layout, content, and/or markup, among other examples. However, in such examples, the updated code may be deployed at a server device and provided to a client device when the client device requests a given user experience. As a result, the user experience (e.g., configured or deployed using the updated code) may not have the same look and feel as the rest of the GUI because the updated code may not use native components of the client device.

In some implementations described herein, a system may provide user experiences in an omni-channel manner using a specification (e.g., referred to herein as a "tile specification" or a "dynamic tile definition"). The tile specification may define a user interface component using a specification language (e.g., a dynamic tile language in JavaScript object notation (JSON)). The system (e.g., one or more server devices) may transmit, and a client device may receive, the tile specification. The client device may render a tile based on the tile specification and use one or more native components to display a tile via a GUI. As used herein, "tile" or "user interface tile" refers to a graphical element that represents an application, function, and/or piece of content, among other examples, within a digital interface, such as a GUI. A tile may be "dynamic" in that the design of the tile, the content presented or displayed via the tile, a function of the tile, and/or a link presented or displayed via the tile, among other examples, may vary over time (e.g., depending on a user experience requested, attributes of the user and/or client device, and/or other factors).

By the system using the tile specification to define the manner in which a user experience is to be displayed via a user interface, the system can dynamically update the user experience by changing information in the tile specification. This enables the system to quickly and easily deploy updates for the user experience because a client device may be configured to obtain the tile specification, extract information from the tile specification, and render the tile using native components to generate the tile for the GUI to be displayed by the client device. This ensures that the tile will be generated in accordance with requirements and/or formats of a given channel because the tile is rendered at the client device (e.g., and is not deployed and/or configured using more complex updates and/or schemes).

In some examples, the system may obtain data to be used to populate (e.g., hydrate) tile specifications. Such data may be referred to herein as "dynamic" data. The data may be dynamic in that the data is obtained during the generation of the tile specification(s) for a requested user experience (e.g., and therefore may change over time and/or be specific to the time at which the data is obtained during the generation of the tile specification(s), such as by being personalized to a particular user with a name, account balance, and/or other information particular to the user). In some examples, a user experience and/or a tile specification may use data that is obtained from one or more data providers (e.g., data sources), such as a system, service, microservice, application, and/or API endpoint, among other examples. Therefore, the system may use a data orchestration component to orchestrate (e.g., manage, configure, transmit, and/or receive) requests for dynamic data. Data orchestration is the process of gathering siloed data from various locations, and organizing the data into a consistent, usable format. The data orchestration component may facilitate efficient and effective data retrieval by enabling seamless integration with data providers, rule engines, and/or external services, among other examples.

The system using the data orchestration component to manage data retrieval may be beneficial in cases where multiple data providers are used to obtain dynamic data for a user experience (e.g., because the data orchestration component may reduce the complexity associated with retrieving data from discrete and separate data providers that may use different formats, schema, and/or request types). However, if a user experience uses dynamic data from a single data provider, then the use of the data orchestration component may increase latency and/or consume additional network resources associated with retrieving the dynamic data. In such examples, the system (e.g., a tile provider system) may transmit a request for data to the data orchestration component, the data orchestration component may process the request and identify the data provider from which the data is to be obtained, the data orchestration component may generate a request to be transmitted to the data provider, the data orchestration component may transmit the request to the data provider, the data provider may transmit the requested data to the data orchestration component, and the data orchestration component may transmit the requested data to the system (e.g., the tile provider system). This process may increase latency and/or consume additional network resources, as compared to the system directly requesting the data from the data provider.

Therefore, the use of the data orchestration component may be beneficial in some cases (e.g., where multiple data providers are used to obtain dynamic data for a given user experience) and transmitting a request for data directly to a data provider may be beneficial in other cases (e.g., where a single data provider is used to obtain dynamic data for a given user experience). However, the system may not have access to information indicating whether a user experience is associated with one or multiple data providers. Therefore, it may be difficult for the system to efficiently request data in different cases, resulting in increased latency and/or consuming additional network resources. Additionally, different data providers may use different formats, request types, and/or schema, among other examples, for data requests. Therefore, without the data orchestration component, it may be difficult for the system to determine the correct format and/or configuration for data requests to different data providers.

Some implementations described herein enable an experience configuration for dynamic user interface tiles. The experience configuration may be associated with a user experience (e.g., a dynamic user experience). The experience configuration may include information that is indicative of a type of data provider that is associated with the user experience (e.g., that provides dynamic data for the user experience). The type of data provider may include a single data provider (e.g., a single microservice or another data provider) or a data orchestrator (e.g., a data orchestration component). The experience configuration indicates one or more data request parameters for formatting a data request to the data provider (e.g., if the data provider is a single data provider). For example, the experience configuration may include information indicating how a tile provider system is to request data from a data provider associated with a given user experience.

The tile provider system may transmit, to the data provider, a data request in accordance with the experience configuration. For example, the tile provider system may generate the data request based on the one or more data request parameters. The tile provider system may receive, from the data provider, dynamic data for the user experience. The tile provider system may generate one or more tile specifications indicating user interface information for a user interface tile associated with the dynamic user experience. The one or more tile specifications may be based on the dynamic data. For example, the one or more tile specifications may include the dynamic data. The tile provider system may transmit, to a client device, the one or more tile specifications to cause the client device to display the dynamic user experience via a user interface.

As a result, the tile provider system may use the experience configuration to transmit data requests to a data orchestrator in some cases and to transmit data requests directly to a data provider (e.g., a microservice) in other cases. This improves the efficiency of the dynamic data retrieval by the tile provider system, by enabling the data provider system to retrieve data via the data orchestrator to reduce complexity (e.g., when a user experience uses data from multiple data providers or services) or retrieve data directly from the data provider to reduce latency and/or conserve network resources (e.g., when a user experience uses data from a single data provider or service). Additionally, by the experience configuration including the one or more data request parameters, the tile provider system may correctly format and/or generate data requests for different data providers that may use different formats, request types, and/or schema, among other examples. This reduces the complexity associated with the tile provider requesting data directly from data providers and/or improves the likelihood of successful data requests because the tile provider may have access to information indicating how data requests should be formatted and/or generated for a given data provider.

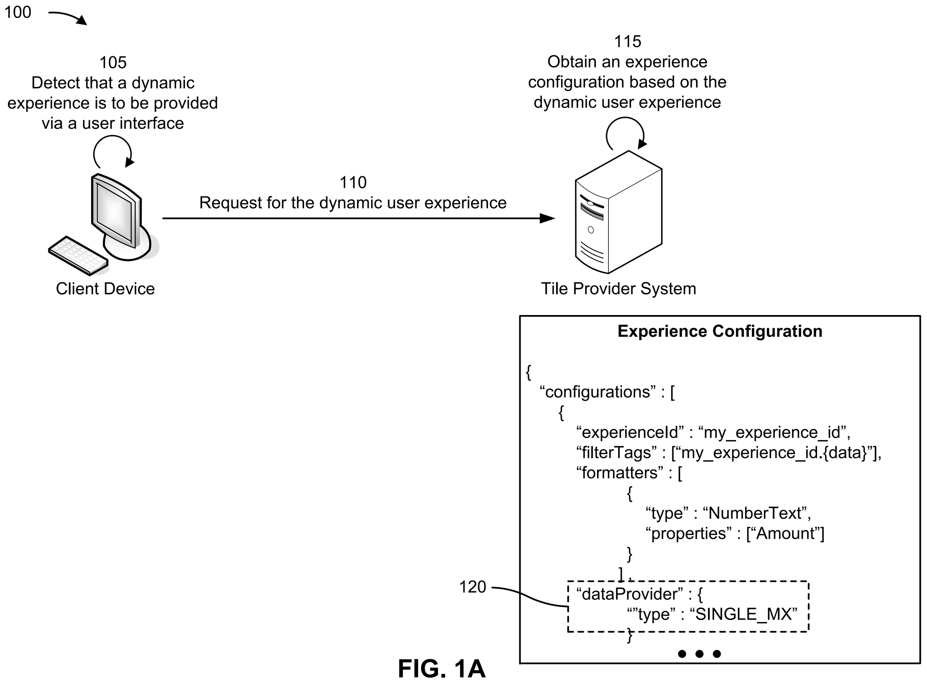

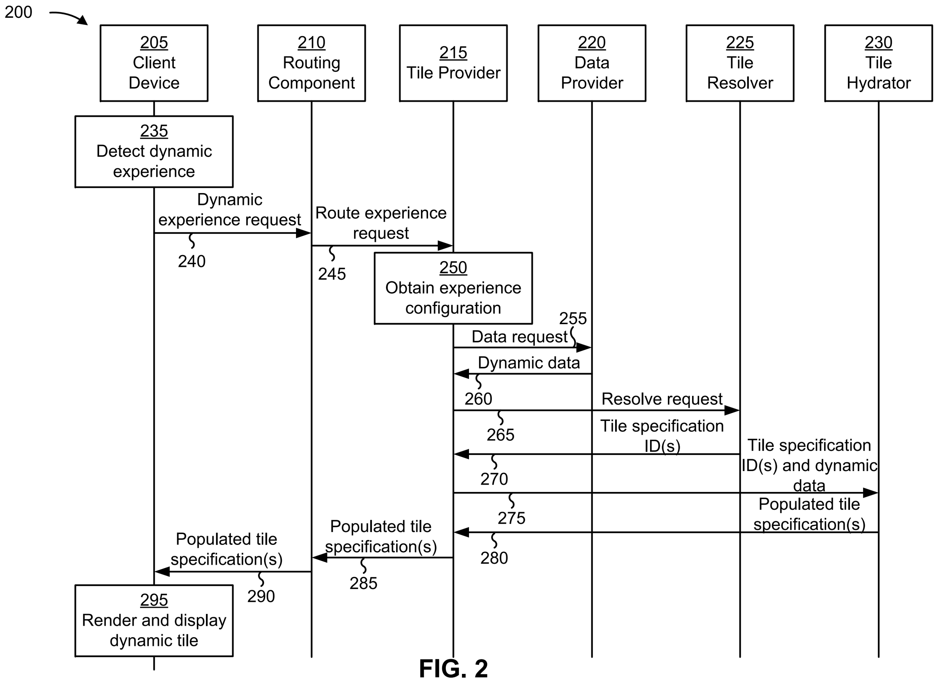

Figs. 1A-1C are diagrams of an example 100 associated with an experience configuration for dynamic user interface tiles. As shown in Figs. 1A-1C, example 100 includes a tile provider system. These devices are described in more detail in connection with Figs. 2-6.

As shown in Fig. 1A, and by reference number 105, the client device may detect that a dynamic user experience is to be provided (e.g., displayed) via a user interface (e.g., a GUI). For example, the client device may detect that a user has navigated to a page, and/or interacted with a graphical element of the user interface, among other examples, that is configured to cause the client device to provide the dynamic user experience. Additionally, or alternatively, the client device may detect or determine that the user interface has been opened via the client device.

As shown by reference number 110, the client device may transmit, and the tile provider system may receive, a request for the dynamic user experience associated with the user interface. For example, the client device may determine the dynamic user experience based on user interaction with the user interface. The client device may determine the dynamic user experience based on the user interface, the page, and/or other information to be displayed via the user interface. The request for the dynamic user experience may include an identifier of the dynamic user experience.

Additionally, the request for the dynamic user experience may include client data associated with the client device. The client data may include an identifier of the client device, and/or an account identifier of an account of a user (e.g., an account that is logged in via the user interface), and/or a user identifier of the user (e.g., a name, an address, and/or other information associated with the user), among other examples.

As shown by reference number 115, the tile provider system may obtain an experience configuration based on the dynamic user experience (e.g., indicated by the request from the client device). For example, the dynamic user experience may be associated with an identifier. Experience configurations may be associated with respective identifiers of dynamic user experiences. For example, the tile provider system may store (and/or may have access to) a mapping between identifiers of dynamic user experiences and experience configurations. For example, the tile provider system may have access to memory (e.g., a database, a registry, a library, and/or a data structure) in which the mapping between identifiers of dynamic user experiences and experience configurations is stored.

The tile provider system may identify, based on the client request (e.g., the request for the dynamic user experience from the client device), an identifier of the dynamic user experience. The tile provider system may obtain, based on the identifier, the experience configuration. For example, the tile provider system may perform a lookup operation using the identifier to determine the experience configuration. The tile provider system may obtain the experience configuration from memory (e.g., a database, a registry, a library, and/or a data structure) in which the experience configuration is stored.

The experience configuration may be a data object that includes information (e.g., one or more key-value pairs and/or an ordered list (or array) of values) that indicate how, and/or a manner in which, the tile provider system is to obtain dynamic data for the dynamic user experience. In some implementations, the experience configuration may use code, such as JSON code, to indicate the information. For example, the experience configuration may be a JSON object, a JSON payload, a JSON configuration, and/or a JSON document. In other implementations, other types of code (e.g., other than JSON code) may be used.

The experience configuration may indicate one or more types of data to be retrieved for the dynamic user experience. For example, the one or more types of data may include account data (e.g., data associated with a given account), client data (e.g., data associated with the client device and/or the user), service data (e.g., data associated with a service), and/or offer data (e.g., data associated with an offer from a service), among other examples. The experience configuration may indicate what is to be retrieved via a data request by the tile provider system for the purposes of generating one or more tile specifications for the dynamic user experience. For example, the one or more types of data may be dynamic data that is to be inserted into a tile specification. Additionally, or alternatively, the one or more types of data may be dynamic data that is to be used by the tile provider system to determine which tile specification(s) are to be provided to the client device for the dynamic user experience.

The experience configuration may include formatting information indicative of how the tile provider system is to generate a data request for dynamic data associated with the dynamic user experience. The formatting information may be based on a data provider associated with the dynamic user experience. For example, the formatting information may enable the tile provider system to generate a data request in a manner that is expected and/or that can be interpreted by the data provider. For example, the experience configuration may indicate a format and configuration for the data request.

For example, the experience configuration may indicate one or more data request parameters for formatting the data request. The one or more data request parameters may include a header version (e.g., a header configuration), a request method (e.g., an application layer protocol request method), one or more schema parameters, and/or a payload configuration, among other examples. The header version may indicate a version or type of header to be used for the data request. The header may include metadata that provides information associated with the data request. The header version (e.g., the header configuration) may indicate a format of the header and/or what metadata is to be included in the header. This enables the data provider to obtain the metadata and properly fulfill the data request based on the metadata.

The request method may indicate an application layer protocol request method to be used for the data request. The application layer protocol request method may include a get method (e.g., to request data from a specified resource), a post method (e.g., to provide data to a specified resource), a put method (e.g., to provide data that is to replace a current resource), a patch method (e.g., to provide data that is to replace a portion of a current resource), a delete method (e.g., to request removal of a resource), and/or a head method (e.g., to request header data for a resource without the actual content of the resource), among other examples. The application layer protocol request method may be a hypertext transfer protocol (HTTP) request method (e.g., HTTP GET, HTTP POST, or HTTP PUT, among other examples) or another type of application layer protocol request method. This enables the tile provider system to request and/or provide data in a manner that is expected by the data provider.

The one or more schema parameters may indicate a structure of data that is to be sent or received via the data request. The one or more schema parameters may indicate one or more query parameters, such as a filter parameter (e.g., indicating one or more conditions for filtering data), a limit parameter (e.g., indicating a number of items to be returned), an offset parameter (e.g., indicating a starting point in a result set), a sorting parameter (e.g., indicating how data should be sorted), and/or a search parameter (e.g., indicating one or more search terms), among other examples. Additionally, or alternatively, the one or more schema parameters may indicate content to be included in a body of the data request, such as a username, an email address, an account number, a password, a first name, a last name, and/or a date of birth, among other examples. In some implementations, the one or more schema parameters may indicate one or more header parameters indicating information to be included in a header of the data request, such as one or more authorization parameters, and/or a content type parameter, among other examples. In some implementations, the one or more schema parameters may include one or more path parameters indicating one or more resources within a path (such as a uniform resource locator (URL) path) for the data request.

The payload configuration may indicate how a payload and/or body of the data request is to be formatted. In some implementations, the payload configuration may indicate what information is to be included in the payload and/or body of the data request. For example, the payload configuration may indicate types of information to be included in the payload or body of the data request, such as one or more identifiers, an account number, a name of a user, an address, and/or a date of birth, among other examples.

The experience configuration may indicate a data provider for the dynamic user experience. For example, as shown by reference number 120, the experience configuration may include a data provider field that indicates the data provider. The data provider may be either a single data provider (e.g., a single data source or a single microservice) or a data orchestrator. The microservice may be a single endpoint configured to provide the dynamic data for the dynamic user experience. The data orchestrator may be configured to obtain data from multiple data sources. The single data provider (e.g., the single microservice) may be configured to obtain data from a single data source. The data provider field enables the tile provider system to determine to which device or location the data request is to be provided. This enables more efficient data retrieval by enabling the tile provider system to quickly and easily identify a type of data provider to be used to obtain dynamic data for the dynamic user experience.

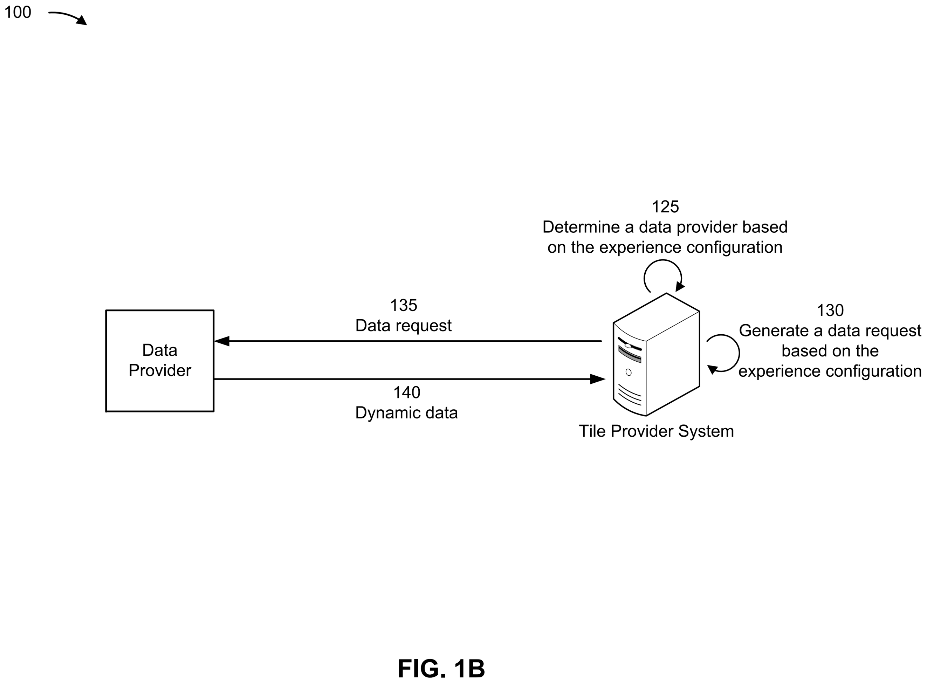

As shown in Fig. 1B, and by reference number 125, the tile provider system may determine a data provider based on the experience configuration. For example, the data provider field may indicate a type of data provider (e.g., a single data provider (a single microservice) or a data orchestrator). The data provider field may indicate to the tile provider system where in the experience configuration the data provider is to be indicated and/or how to obtain information associated with the data provider. For example, if the data provider field indicates that the data provider is a single data provider (a single microservice), then the tile provider system may determine that an address and/or indication of the data provider is to be included in the experience configuration. If the data provider field indicates that the data provider is the data orchestrator, then the tile provider system may determine the address to which the data request is to be transmitted based on a stored configuration.

As shown by reference number 130, the tile provider system may generate a data request based on the experience configuration. For example, the tile provider system may generate the data request in a format indicated by the experience configuration. The tile provider system may generate the data request to include information indicated by the experience configuration (e.g., by the one or more data request parameters). The tile provider system may generate the data request using a format indicated by the experience configuration.

In some implementations, the tile provider system may generate the data request based on the type of data provider. For example, if the type of data provider is a single data provider (e.g., a single microservice), then the tile provider system may generate a transfer protocol data request (e.g., an application layer protocol message, such as an HTTP message). If the type of data provider is the data orchestrator, then the tile provider system may generate a declarative data fetching query. A declarative fetching query may be a query for data that indicates (e.g., specifies) what data is requested, but not how the data is to be retrieved. An example of a declarative fetching query is a GraphQL ^{®} query.

In some implementations, the tile provider system may generate the data request to indicate client data. For example, the request from the client device (e.g., as described in connection with reference number 110) may indicate the client data. The client data may be associated with the client device, the application configured to display the user interface, and/or the user that is using the client device, among other examples. For example, the client data may include a name of the user, an account identifier or an account number, a name or identifier of the application, a date of birth of the user, and/or an address of the user, among other examples. For example, the experience configuration may indicate one or more types of data to be included in the data request and how to format the type(s) of data in the data request. The tile provider system may obtain the actual data to be included in the data request from the client data (e.g., may obtain the one or more types of data from the client data) and may format the client data in the manner indicated by the experience configuration. For example, the data request may indicate the client data in the manner indicated by the experience configuration.

As shown by reference number 135, the tile provider system may transmit, and the data provider may receive, the data request. The data provider may be configured to obtain data requested by the data request from one or more data sources. Additionally, or alternatively, the data provider may be configured to store and/or modify data as indicated by the data request. In some implementations, as shown by reference number 140, the data provider may transmit, and the tile provider system may receive, dynamic data indicated by the data request.

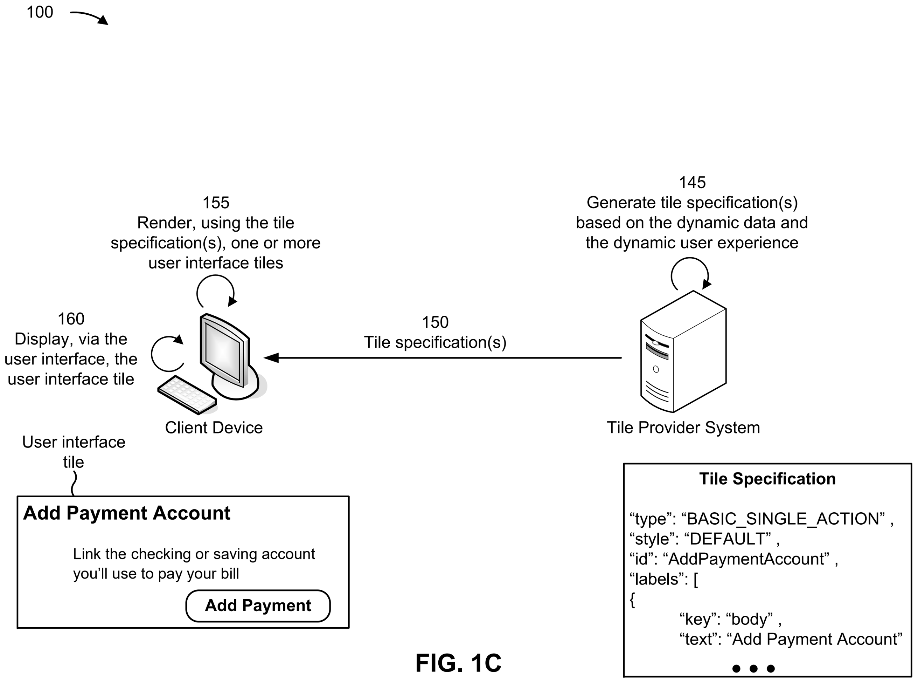

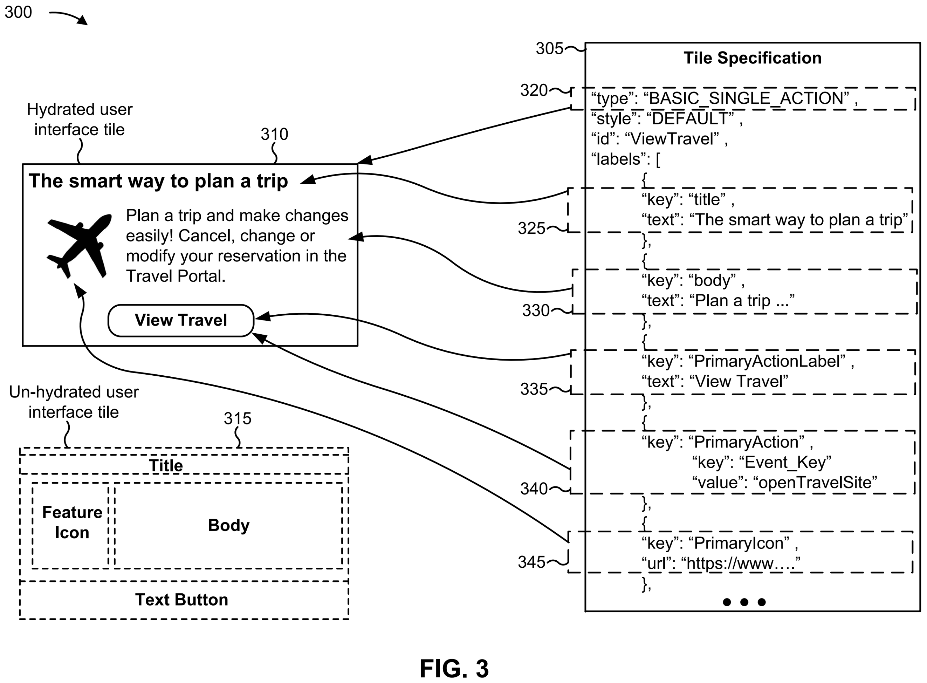

As shown in Fig. 1C, and by reference number 145, the tile provider system may generate one or more tile specifications based on the dynamic data and the dynamic user experience. For example, the tile provider system may generate the one or more tile specifications to include the dynamic data obtained via the data provider. A tile specification is depicted and described in more detail in connection with Fig. 3.

As shown by reference number 150, the tile provider system may transmit, and the client device may receive, the one or more tile specifications. The one or more tile specifications may indicate user interface information for a user interface tile associated with the dynamic user experience (e.g., requested by the client device as described in connection with Fig. 1A and reference number 110). As described in more detail elsewhere herein, the one or more tile specifications may be a data object that indicates user interface information in a channel agnostic manner. The structure and/or content of the tile specification is depicted and described in more detail in connection with Fig. 3.

As shown by reference number 155, the client device may render, using the tile specification, the user interface tile. For example, the client device may render one or more user interface elements associated with the user interface tile based on the tile specification. For example, the client device may interpret and/or decode the tile specification to obtain (e.g., extract) the user interface information. The client device may use a rendering engine (e.g., of the client device and/or application) to process the user interface information and translate the user interface information into visual components (e.g., native components) of a user interface framework that the client device is configured to use. The client device may render the user interface tile (e.g., using the user interface information obtained from the tile specification) in accordance with the rendering engine, operating system, and/or user interface framework that is used by the client device and/or the application. For example, the client device may obtain information for user interface templates and/or user interface actions (e.g., indicated by the tile specification) from local libraries (e.g., stored by the client device and/or accessible by the client device), as described in more detail elsewhere herein (such as in connection with Fig. 3). This significantly reduces the complexity and increases the flexibility for modifying and/or updating user experiences provided by the user interface because the client device (and/or the application) can use the rendering engine and/or visual components (e.g., native components) of the user interface framework of the client device (and/or the application).

As shown by reference number 160, the client device may display, via the user interface, the user interface tile. For example, the client device may provide the one or more user interface elements of the user interface tile for display via the user interface.

As indicated above, Figs. 1A-1C are provided as an example. Other examples may differ from what is described with regard to Figs. 1A-1C.

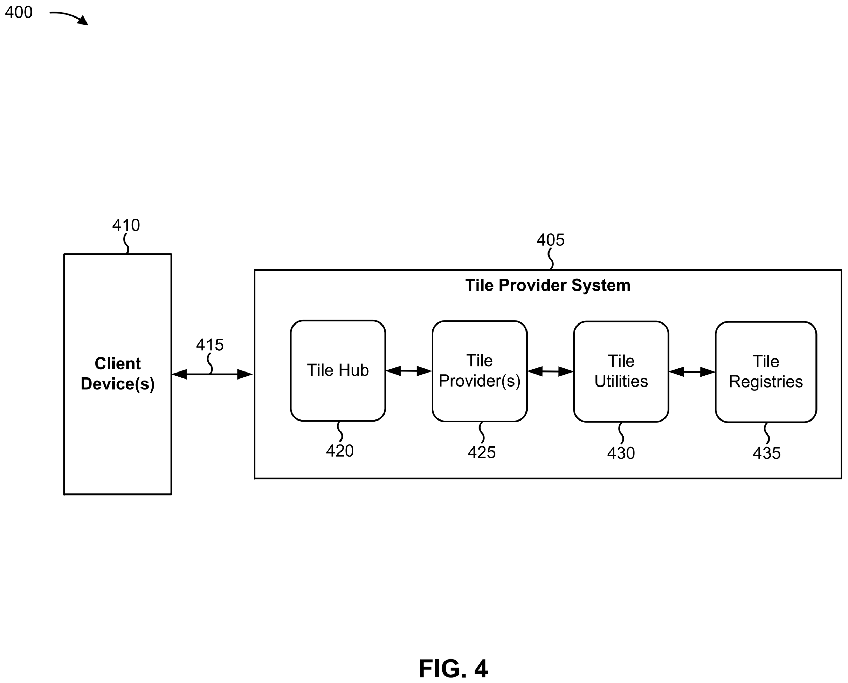

Fig. 2 is a diagram of an example 200 associated with an experience configuration for dynamic user interface tiles. As shown in Fig. 2, a client device 205 may communicate with one or components to obtain one or more tile specifications for a dynamic user experience provided by a user interface displayed by the client device 205. The client device may be, or may be similar to, the client device described in connection with Figs. 1A-1C. The one or more components may include one or more components of a tile provider system, such as a routing component 210, a tile provider 215, a tile resolver 225, and/or a tile hydrator 230. For example, the routing component 210, the tile provider 215, the tile resolver 225, and/or the tile hydrator 230 may be components of the tile provider system described elsewhere herein, such as in connection with Figs. 1A-1C and 4. The one or more components of the tile provider system are described in more detail in connection with Fig. 4. The one or more components of the tile provider system may obtain data (e.g., dynamic data) for the one or more tile specifications via a data provider 220. The data provider 220 may, or may be similar to, the data provider described elsewhere herein, such as in connection with Figs. 1A-1C.

As shown by reference number 235, the client device 205 may detect a dynamic experience. For example, the client device 205 may detect that the dynamic user experience is to be provided (e.g., displayed) via a user interface (e.g., a GUI). For example, the client device 205 may detect that a user has navigated to a page, and/or interacted with a graphical element of the user interface, among other examples, that is configured to cause the client device 205 to provide the dynamic user experience. Additionally, or alternatively, the client device 205 may detect or determine that the user interface has been opened via the client device 205.

As shown by reference number 240, the client device 205 may transmit a dynamic experience request. The client device 205 may transmit, and the routing component 210 may receive, a request for the dynamic user experience associated with the user interface. For example, the client device 205 may determine the dynamic user experience based on user interaction with the user interface. The client device 205 may determine the dynamic user experience based on the user interface, the page, and/or other information to be displayed via the user interface. The dynamic experience request may include an identifier of the dynamic user experience. The dynamic experience request may be similar to the request described in connection with Figs. 1A-1C and reference number 110.

Additionally, the dynamic experience request may include client data associated with the client device 205. The client data may include an identifier of the client device 205, an account identifier of an account of a user (e.g., an account that is logged in via the user interface), and/or a user identifier of the user (e.g., a name, an address, and/or other information associated with the user), among other examples.

As shown by reference number 245, the routing component 210 may route the dynamic experience request to the tile provider 215. For example, the tile provider system may include multiple tile providers 215. For example, tile providers 215 may include a generic tile provider 215 and/or one or more service tile providers 215. The one or more service tile providers 215 may be configured to generate tile specifications for respective services or respective user experiences (e.g., a service tile provider may be specific to a given user experience). The generic tile provider 215 may be configured to generate tile specifications for all other user experiences (e.g., that are not associated with a service tile provider 215). The routing component 210 may route the dynamic experience request to the tile provider 215 that is associated with the user experience requested by the dynamic experience request.

As shown by reference number 250, the tile provider 215 may obtain an experience configuration. The experience configuration may be similar to the experience configuration described in connection with Figs. 1A-1C. The tile provider 215 may obtain an experience configuration based on the dynamic user experience (e.g., indicated by the dynamic experience request). For example, the dynamic user experience may be associated with an identifier. Experience configurations may be associated with respective identifiers of dynamic user experiences. For example, the tile provider system may store (and/or may have access to) a mapping between identifiers of dynamic user experiences and experience configurations. For example, the tile provider system may have access to memory (e.g., a database, a registry, a library, and/or a data structure) in which the mapping between identifiers of dynamic user experiences and experience configurations is stored.

The tile provider 215 may identify, based on the client request (e.g., the request for the dynamic user experience from the client device), an identifier of the dynamic user experience. The tile provider 215 may obtain, based on the identifier, the experience configuration. For example, the tile provider 215 may perform a lookup operation using the identifier to determine the experience configuration. The tile provider 215 may obtain the experience configuration from memory (e.g., a database, a registry, a library, and/or a data structure) in which the experience configuration is stored. In other examples, another component of the tile provider system may obtain the experience configuration. In such examples, the routed experience request may include, or indicate, the experience configuration.

As shown by reference number 255, the tile provider 215 may transmit, and the data provider 220 may receive, a data request. The data request may be based on the experience configuration, as described in more detail elsewhere herein. For example, the experience configuration may indicate or define which data provider (e.g., the data provider 220) is to be used to obtain dynamic data for the dynamic user experience. The tile provider 215 may generate the data request based on the experience configuration, as described in more detail elsewhere herein. In some implementations, the data request may indicate client data that was included in the dynamic experience request (e.g., shown by reference number 240).

As shown by reference number 260, the data provider 220 may transmit, and the tile provider 215 may receive, dynamic data based on the data request. For example, the data provider 220 may obtain, retrieve, add, delete, and/or modify, among other examples, data based on the data request (e.g., as indicated or requested by the data request). The dynamic data may indicate the data that was obtained, retrieved, added, deleted, and/or modified, among other examples, by the data provider 220.

The tile provider may obtain and/or populate one or more tile specifications for the dynamic user experience based on the dynamic data. For example, as shown by reference number 265, the tile provider 215 may transmit, and the tile resolver 225 may receive, a resolve request. The resolve request may request an indication of one or more tile specifications to be provided to the client device 205 for the dynamic user experience. For example, the tile provider 215 may transmit, to the tile resolver 225 (e.g., a tile resolver component), an indication of the dynamic user experience and an indication of the client device 205.

As shown by reference number 270, the tile resolver 225 may transmit, and the tile provider 215 may receive, an indication of one or more tile specifications. For example, the tile resolver 225 may determine one or more tile specifications to be used to provide the dynamic user experience for the client device 205. The tile resolver 225 may determine the one or more tile specifications based on the dynamic user experience and/or capability information of the client device 205. The tile resolver 225 may transmit, and the data provider 220 may receive, one or more identifiers (IDs) of tile specifications (e.g., indicating the one or more tile specifications).

As shown by reference number 275, the tile provider 215 may transmit, and the tile hydrator 230 may receive, the one or more IDs of the tile specification(s) and the dynamic data (e.g., the dynamic data obtained from the data provider 220). For example, the tile provider 215 may transmit, to the tile hydrator 230 (e.g., a tile hydrator component), an indication of the one or more tile specifications and the dynamic data.

The tile hydrator 230 may be configured to populate (e.g., hydrate) the one or more tile specifications using the dynamic data. For example, the tile hydrator 230 may obtain or retrieve the one or more tile specifications (e.g., from a tile registry). The tile hydrator 230 may insert the dynamic data into one or more fields of the tile specification(s) (e.g., one or more label fields, as described in more detail in connection with Fig. 3). Additionally, the tile hydrator 230 may insert other dynamic information into the one or more tile specifications to populate (e.g., hydrate) the one or more tile specifications. As shown by reference number 280, the tile hydrator 230 may transmit, and the tile provider 215 may receive, the one or more tile specifications (e.g., populated or hydrated tile specification(s)).

The tile provider 215 may cause the populated (e.g., hydrated) tile specification(s) to be provided to the client device 205. For example, as shown by reference number 285, the tile provider 215 may transmit, and the routing component 210 may receive, the populated (e.g., hydrated) tile specification(s). The routing component 210 may route the populated (e.g., hydrated) tile specification(s) to the client device 205. For example, as shown by reference number 290, the routing component 210 may transmit, and the client device 205 may receive, the populated (e.g., hydrated) tile specification(s).

As shown by reference number 295, the client device 205 may render and display a dynamic user interface tile based on the populated (e.g., hydrated) tile specification(s). For example, the client device 205 may obtain (e.g., extract) user interface information from the populated (e.g., hydrated) tile specification(s). The client device 205 may process the user interface information to locally render the dynamic user interface tile for the user interface.

As indicated above, Fig. 2 is provided as an example. Other examples may differ from what is described with regard to Fig. 2.

Fig. 3 is a diagram of an example 300 associated with a tile specification 305 for dynamic user interface tiles. As described elsewhere herein, the tile specification 305 may include information (e.g., code and/or instructions) that enables a client device (e.g., the client device described in connection with Figs. 1A-1C and 2 and/or elsewhere herein) to render a user interface tile 310 (e.g., shown in Fig. 3 as a hydrated user interface tile). As used herein, a "hydrated" user interface tile refers to a user interface tile with inserted data or information (e.g., as indicated by the tile specification 305).

For example, a user interface tile template 315 may define a template for a type 320 of user interface tile. The user interface tile template 315 may be an un-hydrated user interface tile (e.g., a user interface tile without data or information inserted). For example, the user interface tile template 315 may define a generic template for the type 320 of user interface tile. As shown in Fig. 3, the user interface tile template 315 may indicate a location, position, orientation, and/or size for one or more fields. As shown in Fig. 3, the one or more fields may include a title, a feature icon, a label, and/or a text button, among other examples. The one or more fields may correspond to user interface elements of the user interface tile 310.

The tile specification 305 may be an information set that defines how to render the user interface tile 310 and/or what information is to be included in the user interface tile 310. The tile specification 305 may be a data object that includes one or more key-value pairs and/or an ordered list (or array) of values that indicate the information set. In some implementations, the tile specification 305 may use code, such as JSON code, to indicate the information set. For example, the tile specification 305 may be a JSON object, a JSON payload, and/or a JSON document.

The tile specification 305 may indicate the type 320 of the user interface tile 310. The type 320 may indicate that the user interface tile template 315 is to be used to render the user interface tile 310. For example, the type 320 may enable the client device to identify the user interface tile template 315 that is to be used to render the user interface tile 310. The user interface tile template 315 may define or indicate one or more native components (e.g., the one or more fields) to be used by the client device to render the user interface tile 310. The type 320 of the user interface tile 310 may be a basic single action tile (e.g., a user interface tile configured or designed to enable a user to perform a basic single action, such as navigate to a travel website as shown in Fig. 3). Other types of user interface tiles may be defined or configured (e.g., for performing other actions or displaying other types of content) in a similar manner, such as by using other user interface tile templates.

The tile specification 305 may include one or more labels (e.g., key-value pairs) for indicating information to be included in the user interface tile 310 and/or actions to be provided by the user interface tile 310. The one or more labels may indicate user interface information for the user interface tile 310. The one or more labels may indicate information and/or elements to be inserted into the one or more fields of the user interface tile template 315. For example, the one or more labels may define text content to be displayed via the user interface tile 310. An image element in the tile specification 305 may define image content to be displayed.

As shown in Fig. 3, the one or more labels may include a title 325. The title 325 may indicate information to be inserted into a title field of the user interface tile template 315. For example, a key value may indicate that the information is associated with the title 325 and text value may indicate the text to be inserted into the title field (e.g., "The smart way to plan a trip" as shown in Fig. 3). The one or more labels may include a body 330. The body 330 may indicate information to be inserted into the body of the user interface tile template 315, such as the label field shown in Fig. 3. For example, a key value may indicate that the information is associated with the body 330 and text value may indicate the text to be inserted into the label field shown in Fig. 3.

The one or more labels may include an action label 335. The action label 335 may indicate information (e.g., text) to be used as a label for an interactive user interface element that is configured to enable the user to perform an action. For example, as described above, the type 320 may be associated with a single action. The user interface tile template 315 may include a field associated with an interactive user interface element that, when interacted with by a user, causes the client device to perform an action. For example, the field associated with an interactive user interface element is shown in Fig. 3 as the text button field. The action label 335 may indicate a label for the interactive user interface element to be included in the user interface tile 310. For example, a key value may indicate that the information is associated with the action label 335 and text value may indicate the text to be inserted as the label (e.g., "View Travel" as shown in Fig. 3). An action element may define the behavior that should be performed when a user interacts (e.g., selects) the interactive user interface element.

The tile specification 305 may indicate one or more actions 340 to be enabled by the user interface tile 310. For example, the one or more actions 340 may be one or more actions to be performed by the client device based on a user interacting with an interactive user interface element of the user interface tile 310. For example, the one or more actions 340 may indicate what the client device is to do based on (e.g., when or after) detecting that a user has interacted with an interactive user interface element of the user interface tile 310. In some implementations, such as when the type 320 is associated with multiple actions, the one or more actions 340 may indicate which interactive user interface elements respective actions of the multiple actions are to be associated with. As an example, the one or more actions 340 indicated by the tile specification 305 may include navigating to a travel website or page (e.g., the travel website or page may be indicated by the value "openTravelSite" as shown in Fig. 3). The client device may configure the user interface tile 310 such that the client device navigates to the indicated travel website or page based on a user interacting with (e.g., clicking, selecting, or touching) the interactive user element (e.g., shown with the action label 335 of "View Travel" in Fig. 3).

The tile specification 305 may indicate image content to be displayed via the user interface tile 310. For example, the tile specification 305 may indicate an icon 345 to be displayed via the user interface tile 310. The tile specification 305 may indicate a source from which the image content can be obtained or retrieved. For example, as shown in Fig. 3, the tile specification 305 may indicate a uniform resource locator (URL) from which the icon 345 shown in the user interface tile 310 can be obtained or retrieved.

The tile specification 305 shown in Fig. 3 is provided as an example. In other examples, a tile specification may indicate different labels, a different quantity of labels, a different type 320, different action(s) 340, and/or a different quantity of actions 340, among other examples. Additionally, the tile specification 305 may define image content, questions, and/or options, among other examples, to be displayed via the user interface tile 310. The tile specification 305 may enable the user interface tile template 315 to be reused for different user experiences. For example, by the tile provider system changing information indicated by the tile specification 305 for the type 320, the user interface tile template 315 can be used by the client device to render user interface tiles for different user experiences. Additionally, the tile provider system can dynamically update a user experience by changing information indicated by the tile specification 305 for the type 320, thereby enabling the client device to render the user interface tile 310 based on the changed information and the user interface tile template 315. This reduces the complexity associated with updating or changing user experiences by the tile provider system defining or configuring the user experiences in a channel-agnostic manner using the tile specification 305.

As indicated above, Fig. 3 is provided as an example. Other examples may differ from what is described with regard to Fig. 3.

Fig. 4 is a diagram of an example 400 associated with a tile provider system 405 for dynamic user interface tiles. The tile provider system 405 may communicate the one or more client devices 410 via a communication interface 415. The tile provider system 405 may be, or may be similar to, the tile provider system described in connection with Figs. 1A-1C and 3. similarly, the one or more client devices 410 may be, or may be similar to, the client device described in connection with Figs. 1A-1C, 2, and 3.

The one or more communication interfaces 415 may include a wireless connection and/or a wired connection. In some implementations, the one or more communication interfaces 415 may include one or more APIs, a transmission control protocol (TCP) interface, a message queue interface, a remote procedure call interface, a simple mail transfer protocol (SMTP) interface, a simple object access protocol (SOAP) interface, and/or an Internet protocol (IP) interface, among other examples. For example, the tile provider system 405 and the one or more client devices 410 may be configured to communicate one or more tile specifications, and/or capability information, among other examples, via the one or more communication interfaces 415.

The client device(s) 410 may include a rendering component (e.g., an engine) configured to interpret and/or decode tile specifications and render user interface tiles. The engine may include a plugin or module configured for interpreting and/or decoding tile specifications, such as the tile specification 305. The client device(s) 410 may include, or be configured to access, one or more libraries. For example, the one or more libraries may include a tile type library, and/or an action library, among other examples. A tile type library may include user interface tile templates (such as the user interface tile template 315) for respective types (such as the type 320) of user interface tiles. An action library may include information for different types of actions to be performed by the client device(s) 410, such as the one or more actions 340. The one or more libraries may include information that is specific to a channel, a framework (e.g., a coding framework), and/or ecosystem, among other examples in which a given client device 410 is configured to operate. This enables the client device 410 to obtain the information (e.g., that is specific to a channel, a framework (e.g., a coding framework), and/or ecosystem) as part of interpreting and/or decoding tile specifications, thereby enabling the client device to render the user interface tiles (e.g., as defined by the tile specification(s)) in accordance with the channel, a framework (e.g., a coding framework), and/or ecosystem examples in which the given client device 410 is configured to operate.

As shown in Fig. 4, the tile provider system 405 may include one or more components, such as a tile hub component 420 (e.g., which may be, or include, the routing component 210), one or more tile provider components 425 (e.g., the tile provider 215), one or more tile utility components 430 (e.g., the tile resolver 225 and/or the tile hydrator 230), and/or one or more tile registries 435, among other examples. The tile hub component 420 may be configured to route requests for user experiences to a given tile provider component 425. For example, the tile hub component 420 may be a routing component that is configured to route requests for user experiences based on a type of user experience, and/or a client device 410 that transmitted the request(s), among other examples. For example, one or more tile provider components 425 may include a generic tile provider component and/or one or more service tile provider components. The one or more service tile provider components may be configured to generate tile specifications for respective services or respective user experiences (e.g., a service tile provider may be specific to a given user experience). The generic tile provider component may be configured to generate tile specifications for all other user experiences (e.g., that are not associated with a service tile provider components).

For example, a tile provider component 425 may be configured to obtain data from one or more data sources to be included in a tile specification. The tile provider component 425 may be configured to transmit, to one or more data sources, a request for data associated with a client device 410 (e.g., associated with an account or user that is associated with the client device 410) that transmitted a request for a user experience. The tile provider component 425 may be configured to receive, from the one or more data sources, the data (sometimes referred to herein as "dynamic" data). The tile provider component 425 may be configured to communicate with the one or more tile utility components 430 to generate the tile specification(s).

For example, the one or more tile utility components 430 may include a resolver component and a hydrator component. The resolver component may be configured to identify one or more tile specifications and/or one or more user interface tile templates 315 for an indicated user experience. For example, the tile provider component 425 may transmit, and the resolver component may receive, an indication of the user experience requested by a client device 410. The resolver component may identify (e.g., from the one or more tile registries 435) one or more tile specifications and/or one or more user interface tile templates 315 for the user experience. The one or more tile registries 435 may store tile specifications, configurations, capability information, among other examples, for various user experiences.

The hydrator component may be configured to insert information into one or more tile specifications. For example, the one or more tile specifications and/or one or more user interface tile templates 315 obtained by the resolver component may include one or more placeholder fields to be replaced with data (e.g., the dynamic data for the client device 410) to generate a tile specification that can be used by the client device 410 for rendering one or more user interface tiles. For example, the tile provider component 425 may transmit, and the hydrator component may receive, an indication of the one or more tile specifications and the data that was obtained by the tile provider component 425 (e.g., the dynamic data for the client device 410). The hydrator component may insert the data into the one or more tile specifications to generate one or more tile specifications that are ready for rendering by the client device 410. The hydrator component may transmit, and the tile provider component 425 may receive, the one or more tile specifications (e.g., hydrated tile specification(s)). The tile provider component 425 may cause the one or more tile specifications to be transmitted to the client device 410 (e.g., via the tile hub component 420). For example, the tile provider system 405 may transmit, and the client device 410 may receive, the one or more tile specifications (e.g., hydrated tile specification(s)) via the communication interface 415.

The client device 410 may render one or more user interface tiles based on the one or more tile specifications and the libraries described above. For example, the engine of the client device may be configured to render the one or more user interface tiles based on the one or more tile specifications and the libraries. The client device 410 may display the one or more user interface tiles via a user interface (e.g., a GUI).

As indicated above, Fig. 4 is provided as an example. Other examples may differ from what is described with regard to Fig. 4.

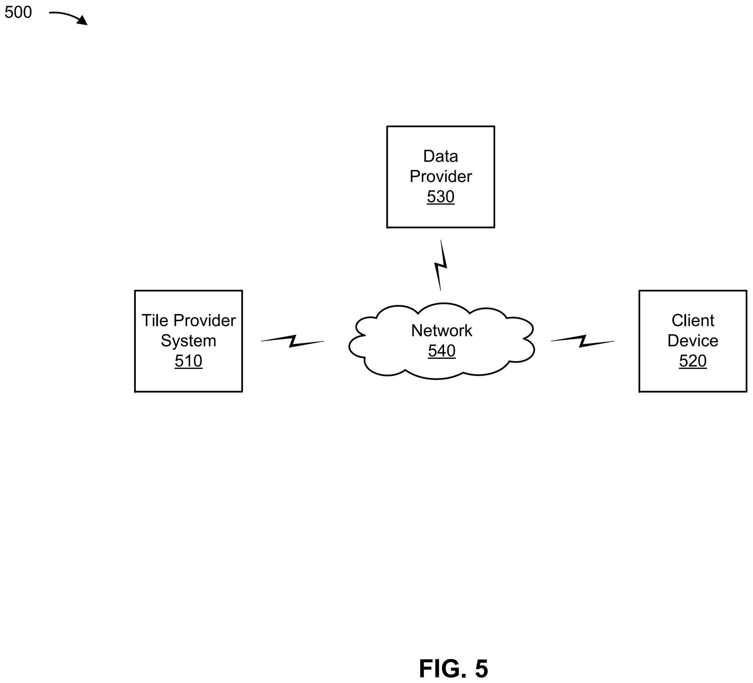

Fig. 5 is a diagram of an example environment 500 in which systems and/or methods described herein may be implemented. As shown in Fig. 5, environment 500 may include a tile provider system 510 (e.g., the tile provider system 405), a client device (e.g., the client device 205, and/or a client device 410), a data provider 530, and a network 540. Devices of environment 500 may interconnect via wired connections, wireless connections, or a combination of wired and wireless connections.

The tile provider system 510 may include one or more devices capable of receiving, generating, storing, processing, providing, and/or routing information associated with an experience configuration for dynamic user interface tiles, as described elsewhere herein. The tile provider system 510 may include a communication device and/or a computing device. For example, the tile provider system 510 may include a server, such as an application server, a client server, a web server, a database server, a host server, a proxy server, a virtual server (e.g., executing on computing hardware), a server in a cloud computing system, and/or a serverless component in a cloud computing system (e.g., one or more serverless functions). In some implementations, the tile provider system 510 may include computing hardware used in a cloud computing environment.

The client device 520 may include one or more devices capable of receiving, generating, storing, processing, and/or providing information associated with an experience configuration for dynamic user interface tiles, as described elsewhere herein. The client device 520 may include a communication device and/or a computing device. For example, the client device 520 may include a wireless communication device, a mobile phone, a user equipment, a laptop computer, a tablet computer, a desktop computer, a wearable communication device (e.g., a smart wristwatch, a pair of smart eyeglasses, a head mounted display, or a virtual reality headset), or a similar type of device.

The data provider 530 may include one or more devices capable of receiving, generating, storing, processing, and/or providing information associated with an experience configuration for dynamic user interface tiles, as described elsewhere herein. The data provider 530 may include a communication device and/or a computing device. For example, the data provider 530 may include a database, a server, a database server, an application server, a client server, a web server, a host server, a proxy server, a virtual server (e.g., executing on computing hardware), a server in a cloud computing system, a device that includes computing hardware used in a cloud computing environment, or a similar type of device. The data provider 530 may communicate with one or more other devices of environment 500, as described elsewhere herein. As described elsewhere herein, the data provider 530 may provide dynamic data for populating (e.g., hydrating) tile specifications for dynamic user interface tiles.

The network 540 may include one or more wired and/or wireless networks. For example, the network 540 may include a wireless wide area network (e.g., a cellular network or a public land mobile network), a local area network (e.g., a wired local area network or a wireless local area network (WLAN), such as a Wi-Fi network), a personal area network (e.g., a Bluetooth network), a near-field communication network, a telephone network, a private network, the Internet, and/or a combination of these or other types of networks. The network 540 enables communication among the devices of environment 500.

The number and arrangement of devices and networks shown in Fig. 5 are provided as an example. In practice, there may be additional devices and/or networks, fewer devices and/or networks, different devices and/or networks, or differently arranged devices and/or networks than those shown in Fig. 5. Furthermore, two or more devices shown in Fig. 5 may be implemented within a single device, or a single device shown in Fig. 5 may be implemented as multiple, distributed devices. Additionally, or alternatively, a set of devices (e.g., one or more devices) of environment 500 may perform one or more functions described as being performed by another set of devices of environment 500.

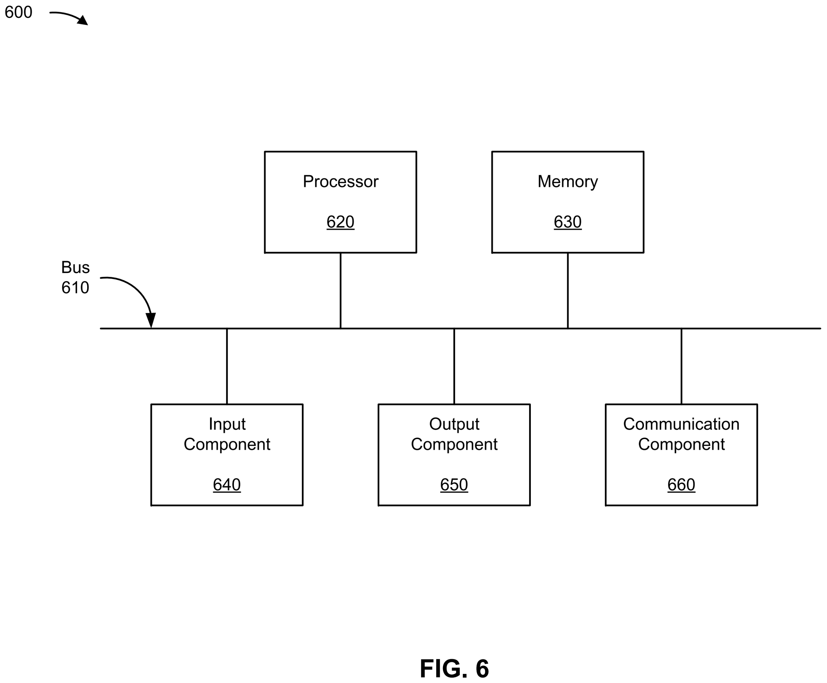

Fig. 6 is a diagram of example components of a device 600 associated with an experience configuration for dynamic user interface tiles. The device 600 may correspond to a tile provider system (e.g., the tile provider system 405 and/or the tile provider system 510), a client device (e.g., the client device 205, the client device 410, and/or the client device 520), a data provider (e.g., the data provider 220 and/or the data provider 530), the routing component 210, the tile provider 215, the tile resolver 225, the tile hydrator 230, the tile hub component 420, the tile provider component 425, a tile utility component 430, and/or a tile registry component 435. In some implementations, a tile provider system (e.g., the tile provider system 405 and/or the tile provider system 510), a client device (e.g., the client device 205, the client device 410, and/or the client device 520), a data provider (e.g., the data provider 220 and/or the data provider 530), the routing component 210, the tile provider 215, the tile resolver 225, the tile hydrator 230, the tile hub component 420, the tile provider component 425, a tile utility component 430, and/or a tile registry component 435 may include one or more devices 600 and/or one or more components of the device 600. As shown in Fig. 6, the device 600 may include a bus 610, a processor 620, a memory 630, an input component 640, an output component 650, and/or a communication component 660.

The bus 610 may include one or more components that enable wired and/or wireless communication among the components of the device 600. The bus 610 may couple together two or more components of Fig. 6, such as via operative coupling, communicative coupling, electronic coupling, and/or electric coupling. For example, the bus 610 may include an electrical connection (e.g., a wire, a trace, and/or a lead) and/or a wireless bus. The processor 620 may include a central processing unit, a graphics processing unit, a microprocessor, a controller, a microcontroller, a digital signal processor, a field-programmable gate array, an application-specific integrated circuit, and/or another type of processing component. The processor 620 may be implemented in hardware, firmware, or a combination of hardware and software. In some implementations, the processor 620 may include one or more processors capable of being programmed to perform one or more operations or processes described elsewhere herein.

The memory 630 may include volatile and/or nonvolatile memory. For example, the memory 630 may include random access memory (RAM), read only memory (ROM), a hard disk drive, and/or another type of memory (e.g., a flash memory, a magnetic memory, and/or an optical memory). The memory 630 may include internal memory (e.g., RAM, ROM, or a hard disk drive) and/or removable memory (e.g., removable via a universal serial bus connection). The memory 630 may be a non-transitory computer-readable medium. The memory 630 may store information, one or more instructions, and/or software (e.g., one or more software applications) related to the operation of the device 600. In some implementations, the memory 630 may include one or more memories that are coupled (e.g., communicatively coupled) to one or more processors (e.g., processor 620), such as via the bus 610. Communicative coupling between a processor 620 and a memory 630 may enable the processor 620 to read and/or process information stored in the memory 630 and/or to store information in the memory 630.

The input component 640 may enable the device 600 to receive input, such as user input and/or sensed input. For example, the input component 640 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 650 may enable the device 600 to provide output, such as via a display, a speaker, and/or a light-emitting diode. The communication component 660 may enable the device 600 to communicate with other devices via a wired connection and/or a wireless connection. For example, the communication component 660 may include a receiver, a transmitter, a transceiver, a modem, a network interface card, and/or an antenna.

The device 600 may perform one or more operations or processes described herein. For example, a non-transitory computer-readable medium (e.g., memory 630) may store a set of instructions (e.g., one or more instructions or code) for execution by the processor 620. The processor 620 may execute the set of instructions to perform one or more operations or processes described herein. In some implementations, execution of the set of instructions, by one or more processors 620, causes the one or more processors 620 and/or the device 600 to perform one or more operations or processes described herein. In some implementations, hardwired circuitry may be used instead of or in combination with the instructions to perform one or more operations or processes described herein. Additionally, or alternatively, the processor 620 may be configured to perform one or more operations or processes described herein. Thus, implementations described herein are not limited to any specific combination of hardware circuitry and software.

The number and arrangement of components shown in Fig. 6 are provided as an example. The device 600 may include additional components, fewer components, different components, or differently arranged components than those shown in Fig. 6. Additionally, or alternatively, a set of components (e.g., one or more components) of the device 600 may perform one or more functions described as being performed by another set of components of the device 600.

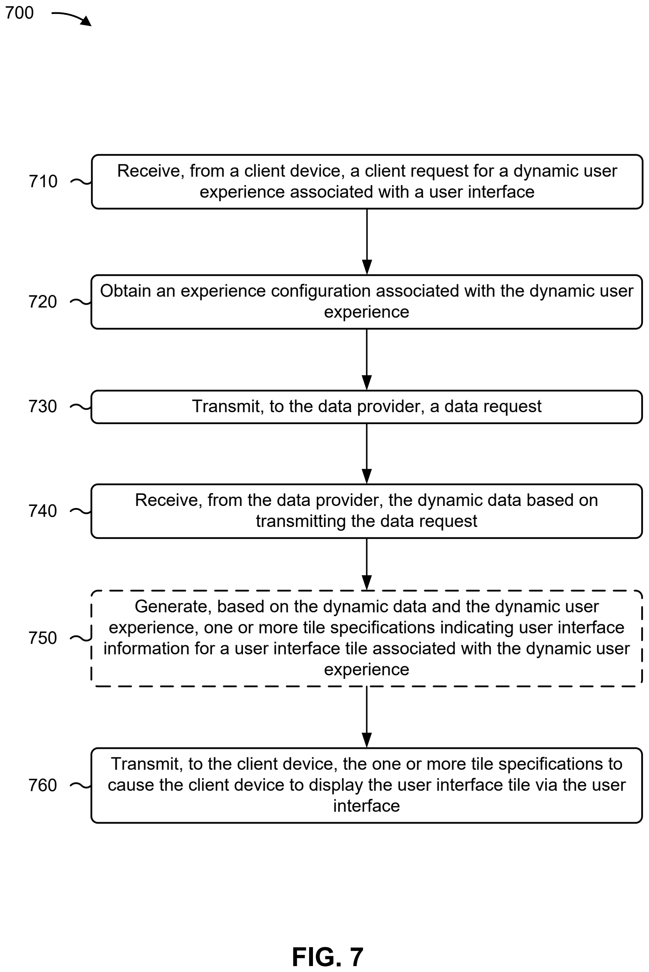

Fig. 7 is a flowchart of an example process 700 associated with an experience configuration for dynamic user interface tiles. In some implementations, one or more process blocks of Fig. 7 may be performed by a tile provider system (e.g., the tile provider system 405 and/or tile provider system 510). In some implementations, one or more process blocks of Fig. 7 may be performed by another device or a group of devices separate from or including the tile provider system, such as a client device (e.g., the client device 205, the client device 410, and/or the client device 520), a data provider (e.g., the data provider 220 and/or the data provider 530), the routing component 210, the tile provider 215, the tile resolver 225, the tile hydrator 230, the tile hub component 420, the tile provider component 425, a tile utility component 430, and/or a tile registry component 435. Additionally, or alternatively, one or more process blocks of Fig. 7 may be performed by one or more components of the device 600, such as processor 620, memory 630, input component 640, output component 650, and/or communication component 660.

As shown in Fig. 7, process 700 may include receiving, from a client device, a client request for a dynamic user experience associated with a user interface (block 710). For example, the tile provider system (e.g., using processor 620, memory 630, input component 640, and/or communication component 660) may receive, from a client device, a client request for a dynamic user experience associated with a user interface, as described above in connection with reference number 110 of Fig. 1A and/or reference number 240 of Fig. 2. As an example, a user may interact with the user interface to cause the client device to request the dynamic user experience.

As further shown in Fig. 7, process 700 may include obtaining an experience configuration associated with the dynamic user experience (block 720). For example, the tile provider system (e.g., using processor 620 and/or memory 630) may obtain an experience configuration associated with the dynamic user experience, as described above in connection with reference number 115 of Fig. 1A and/or reference number 250 of Fig. 2. In some implementations, the experience configuration indicates a data provider for the dynamic user experience. In some implementations, the data provider is either a microservice or a data orchestrator. The experience configuration enables the tile provider system to determine what data is to be requested, from where the data is to be requested, and/or how the data is to be requested.

As further shown in Fig. 7, process 700 may include transmitting, to the data provider, a data request, wherein the data request is for dynamic data associated with the dynamic user experience (block 730). For example, the tile provider system (e.g., using processor 620, memory 630, and/or communication component 660) may transmit, to the data provider, a data request, wherein the data request is for dynamic data associated with the dynamic user experience, as described above in connection with reference number 135 of Fig. 1B and/or reference number 255 of Fig. 2. In some implementations, the data request is generated based on the experience configuration. For example, the data request may use a format and/or configuration indicated by the experience configuration.

As further shown in Fig. 7, process 700 may include receiving, from the data provider, the dynamic data based on transmitting the data request (block 740). For example, the tile provider system (e.g., using processor 620, memory 630, input component 640, and/or communication component 660) may receive, from the data provider, the dynamic data based on transmitting the data request, as described above in connection with reference number 140 of Fig. 1B and/or reference number 260 of Fig. 2. As an example, the dynamic data may be data indicated by the data request that is obtained from a data provider (e.g., one or more data sources).

As further shown in Fig. 7, process 700 may optionally include generating, based on the dynamic data and the dynamic user experience, one or more tile specifications indicating user interface information for a user interface tile associated with the dynamic user experience (block 750). For example, the tile provider system (e.g., using processor 620 and/or memory 630) may generate, based on the dynamic data and the dynamic user experience, one or more tile specifications indicating user interface information for a user interface tile associated with the dynamic user experience, as described above in connection with reference number 145 of Fig. 1C and/or reference number 265, reference number 270, reference number 275, and reference number 280 of Fig. 2. As an example, the one or more tile specifications may include at least a portion of the dynamic data.

As further shown in Fig. 7, process 700 may include transmitting, to the client device, the one or more tile specifications to cause the client device to display the user interface tile via the user interface (block 760). For example, the tile provider system (e.g., using processor 620, memory 630, and/or communication component 660) may transmit, to the client device, the one or more tile specifications to cause the client device to display the user interface tile via the user interface, as described above in connection with reference number 150 of Fig. 1C and/or reference number 290 of Fig. 2. As an example, the one or more tile specifications may enable the client device to extract user interface information to locally render one or more user interface tiles for the requested dynamic user interface.

Although Fig. 7 shows example blocks of process 700, in some implementations, process 700 may include additional blocks, fewer blocks, different blocks, or differently arranged blocks than those depicted in Fig. 7. Additionally, or alternatively, two or more of the blocks of process 700 may be performed in parallel. The process 700 is an example of one process that may be performed by one or more devices described herein. These one or more devices may perform one or more other processes based on operations described herein, such as the operations described in connection with Figs. 1A-1C and 2-4. Moreover, while the process 700 has been described in relation to the devices and components of the preceding figures, the process 700 can be performed using alternative, additional, or fewer devices and/or components. Thus, the process 700 is not limited to being performed with the example devices, components, hardware, and software explicitly enumerated in the preceding figures.

The foregoing disclosure provides illustration and description, but is not intended to be exhaustive or to limit the implementations to the precise forms disclosed. Modifications may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The hardware and/or software code described herein for implementing aspects of the disclosure should not be construed as limiting the scope of the disclosure. Thus, the operation and behavior of the systems and/or methods are described herein without reference to specific software code - it being understood that software and hardware can be used to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination and permutation of those items, including single members. As an example, "at least one of: a, b, or c" is intended to cover a, b, c, a-b, a-c, b-c, and a-b-c, as well as any combination with multiple of the same item. As used herein, the term "and/or" used to connect items in a list refers to any combination and any permutation of those items, including single members (e.g., an individual item in the list). As an example, "a, b, and/or c" is intended to cover a, b, c, a-b, a-c, b-c, and a-b-c.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors configured to: perform X; perform Y; and perform Z," that claim should be interpreted to mean "one or more processors configured to perform X; one or more (possibly different) processors configured to perform Y; and one or more (also possibly different) processors configured to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A system for configuring a data retrieval mechanism for dynamic user interface tiles, the system comprising:
one or more memories; and
one or more processors, communicatively coupled to the one or more memories, configured to:
receive, from a client device, a client request for a dynamic user experience associated with a user interface, wherein the client request indicates client data associated with the client device;
obtain an experience configuration associated with the dynamic user experience, wherein the experience configuration indicates that a data provider for the dynamic user experience is a microservice, and wherein the experience configuration indicates one or more data request parameters for formatting a data request to the microservice;
transmit, to the microservice, the data request, wherein the data request is for dynamic data associated with the dynamic user experience, wherein the data request is generated based on the one or more data request parameters, and wherein the data request indicates the client data;
receive, from the microservice, the dynamic data based on the data request;
generate, based on the dynamic data and the dynamic user experience, one or more tile specifications indicating user interface information for a user interface tile associated with the dynamic user experience; and
transmit, to the client device, the one or more tile specifications to cause the client device to display the dynamic user experience via the user interface.

2. The system of claim 1, wherein the one or more processors, to generate the one or more tile specifications, are configured to:
transmit, to a tile resolver component, an indication of the dynamic user experience and an indication of the client device;
receive, from the tile resolver component, an indication of the one or more tile specifications;
transmit, to a tile hydrator component, an indication of the one or more tile specifications and the dynamic data; and
receive, from the tile hydrator component, the one or more tile specifications.

3. The system of claim 1 or 2, wherein:
(a) the one or more data request parameters indicate an application layer protocol request method to be used for the data request; and/or
(b) the one or more data request parameters include at least one of a header version, one or more schema parameters, or a payload configuration.

4. The system of any one of the preceding claims, wherein the one or more processors, to obtain the experience configuration, are configured to:
identify, based on the client request, an identifier of the dynamic user experience; and
obtain, based on the identifier, the experience configuration.

5. The system of any one of the preceding claims, wherein the one or more processors are further configured to:
generate the data request in a format indicated by the one or more data request parameters, wherein a body of the data request indicates the client data.

6. The system of any one of the preceding claims, wherein the microservice is a single endpoint configured to provide the dynamic data for the dynamic user experience.

7. A method of configuring a data retrieval mechanism for dynamic user interface tiles, comprising:
receiving, by a tile provider system and from a client device, a client request for a dynamic user experience associated with a user interface;
obtaining, by the tile provider system, an experience configuration associated with the dynamic user experience, wherein the experience configuration indicates a data provider for the dynamic user experience, and wherein the data provider is either a microservice or a data orchestrator;
transmitting, by the tile provider system and to the data provider, a data request, wherein the data request is for dynamic data associated with the dynamic user experience, wherein the data request is generated based on the experience configuration;
receiving, by the tile provider system and from the data provider, the dynamic data based on transmitting the data request;
generating, by the tile provider system and based on the dynamic data and the dynamic user experience, one or more tile specifications indicating user interface information for a user interface tile associated with the dynamic user experience; and
transmitting, by the tile provider system and to the client device, the one or more tile specifications to cause the client device to display the user interface tile via the user interface.

8. The method of claim 7, wherein the experience configuration indicates one or more data request parameters for formatting the data request;
wherein, optionally, the data provider is the microservice, and wherein the one or more data request parameters include at least one of a request method, a header configuration, or a payload configuration.

9. The method of claim 7 or 8, wherein:
(a) the data orchestrator is configured to obtain data from multiple data sources, and the microservice is configured to obtain data from a single data source; and/or
(b) the data provider is the data orchestrator, and the data request includes a declarative data fetching query.

10. The method of any one of claims 7 to 9, wherein:
(a) the experience configuration includes a data provider field that indicates the data provider; and/or
(b) the experience configuration indicates a format and configuration for the data request.

11. The method of any one of claims 7 to 10, wherein generating the data request comprises:
transmitting, to a tile resolver component, an indication of the dynamic user experience and an indication of the client device;
receiving, from the tile resolver component, an indication of the one or more tile specifications;
transmitting, to a tile hydrator component, an indication of the one or more tile specifications and the dynamic data; and
receiving, from the tile hydrator component, the one or more tile specifications, wherein the one or more tile specifications are populated using the dynamic data.

12. A system, comprising:
a routing component configured to route requests for dynamic user experiences to tile providers;
a tile resolver component configured to identify tile specifications for dynamic user experiences;
a tile hydrator component configured to populate the tile specifications; and
a tile provider configured to:
obtain, from the routing component, an indication of a dynamic user experience requested by a client device;
obtain an experience configuration associated with the dynamic user experience, wherein the experience configuration indicates a data provider for the dynamic user experience, and wherein the data provider is either a microservice or a data orchestrator;
transmit, to the data provider, a data request, wherein the data request is for dynamic data associated with the dynamic user experience, wherein the data request is generated based on the experience configuration;
receive, from the data provider, the dynamic data based on the data request;
generate, based on the dynamic data and the dynamic user experience, one or more tile specifications indicating user interface information for a user interface tile associated with the dynamic user experience; and
transmit, to the routing component, the one or more tile specifications to cause the user interface tile to be displayed.

13. The system of claim 12, wherein the tile provider, to generate the one or more tile specifications, is configured to:
transmit, to the tile resolver component, an indication of the dynamic user experience and an indication of the client device;
receive, from the tile resolver component, an indication of the one or more tile specifications;
transmit, to the tile hydrator component, an indication of the one or more tile specifications and the dynamic data; and
receive, from the tile hydrator component, the one or more tile specifications, wherein the one or more tile specifications are populated using the dynamic data.

14. The system of claim 12 or 13, wherein the tile provider, to obtain the indication of the dynamic user experience requested by the client device, is configured to:
obtain client data associated with the client device, and wherein the data request indicates the client data.

15. The system of any one of claims 12 to 14, wherein:
(a) the experience configuration indicates that the data provider is the microservice, and the tile provider is configured to generate the data request using a format indicated by the experience configuration; and/or
(b) the experience configuration indicates that the data provider is the data orchestrator, and the tile provider is configured to generate a declarative data fetching query that is configured to cause the data orchestrator to provide the dynamic data.
